# EUROPEAN PATENT SPECIFICATION

(11) **EP 2 564 689 B1**
(45) Date of publication and mention of the grant of the patent: **14.10.2015**
(21) Application number: 11179420.2
(22) Date of filing: 30.08.2011
(51) Int. Cl.: A01G 9/02

(54) **Vegetated panel and associated vegetated wall**
Bewachsene Fassadenplatte und zugehörige bewachsene Wand
Panneau végétalisé et mur végétalisé associé

(43) Date of publication of application: 06.03.2013
(73) Proprietor: Saint-Gobain Cultilene BV, 5048 CA Tilburg (NL)
(72) Inventor: Lautenbach, Klaas Jan, 5048 CA Tilburg (NL)
(74) Representative: Croonenbroek, Thomas Jakob

(56) References cited:
- EP-A1- 0 393 735
- DE-A1-102009 031 291
- FR-A1- 2 601 552
- US-A1- 2010 083 571

## Description

The invention relates to a vegetated panel comprising at least two growth media for holding plants.

Such panels are generally known from e.g. EP0393735.

This invention is in particular applicable to placing plants on vertical walls. It may be internal walls or external walls. The invention also relates to a vegetated wall comprising such vegetated panels.

The vegetated panels comprise growth media for cultivation of plants.

The plants are introduced into growth media that may be themselves contained in frame, and are cultivated up to an adequate development stage in order to cover totally or partially said frame or developed plants are directly introduced into growth media.

A significant problem is that the water has a tendency to accumulate in the lower portion of the panel, as soon as said panel is made vertical.

This is due to the capillary phenomenon.

As a consequence, the top of the panel is dry and the bottom is humid. By instance, for a one meter panel only the fifteen last centimetres are humid while the top is dry.

A solution consists in giving water continuously.

However this solution is not economic.

Another problem of known vegetated walls is that the vegetated panels may comprise many structure parts.

That leads to a relatively heavy panel. As a consequence, many operators may be needed for handling. Moreover, such a panel may be relatively expensive.

Further, for changing the plants, for example depending on the season or when flowers are fade, the whole panel has to be changed. That solution has several drawbacks as it requires many operators and is not economic since the whole plants may not have to be changed.

The object of the present invention is thus to overcome these drawbacks of the prior art.

To this end, one subject of the invention is a vegetated panel comprising at least BRT0793 two growth media for plants, characterized in that said growth media are separated by an interlayer, said interlayer both preventing direct contact between both growth media, and being water permeable.

The interlayer is thus made so as to prevent direct contact between growth media (which concerned growth media are those being intended to be vertically superposed one compared to one another), in the aim of preventing notably most (at least 60%) or all of the liquid in one media to flow through the capillary, notably under gravity (the panel being intended to be placed vertically with growth media vertically superposed), and thus is made in a different material (from the growth media) not enhancing water flowing (notably different from a fibrous or porous material of the type inducing capillary effects). Simultaneously, as above defined, the interlayer is also chosen water permeable, in so far as it lets a part of water (which is the water in excess as explained hereunder) in a first growth medium flow to the second growth medium (notably by gravity).

The water permeability of the interlayer is advantageously such that it lets flow the water in excess (only), the pF1 (water retention capacity) of the (material(s) forming the) interlayer preferably being lower than 10% (10% water content, which means the fraction of the volume of substrate that is occupied with water). The pF1 is determined according to standard EN 13041 (1999) by subjecting samples to pull forces. Thus for a depression expressed as a function of the logarithm of the height of the water column (in cm), also called pF, the percentage of the volume of the substrate which is occupied by the liquid (generally water-based or in aqueous phase, usually water filled with nutrients for plants) is defined, the pF1 corresponding practically to the condition of maximum retention and being established equal to 1 (or 10 cm on the water column). For the pF equal to 2 (pF2), which in practice corresponds to the highest degree of pull which can be exerted (by plants), the pF2 of the interlayer is also preferably lower than 10%, and the pF0 (free drainage) is preferably also lower than 10%.

Preferably, the interlayer also prevents the sagging of growth media on the one(s) underneath over time once the panel is put in its vertical use position. Notably, the interlayer is thus advantageously mostly or entirely solid, it advantageously covers most (at least 50%, preferably at least 75%, notably more than 90%, and generally, approximately all) of the adjacent surfaces of the growth media between which it is placed, and it generally presents an approximate constant thickness (generally between 1 and 3.5 cm) throughout its surface so as to fulfill in particular its above required functions according to the invention.

The interlayer can be made of one or rather several components or layers. Generally and advantageously, it comprises at least one layer of particles or flakes of the millimeter or centimeter size (generally mostly from 0.5 mm to 5 cm wide or long), held together by at least a binder, and it also comprises at least a veil (or porous structure or structure with voids) on at least one side. Preferably, at least one component, generally the veil, is made or treated such as it resist roots, notably either thanks to a pore or mesh size wide enough to let water flow but too small to let roots go through, or thanks to a treatment, generally chemical, to make it phytotoxic (toxic to plant growth), for example a treatment or covering with a metal like copper, etc. The distinct particles and voids or significant spaces between said particles prevent the capillary phenomena whereas the veil prevent the passage of roots and simultaneously spread the liquid, coming from one growth media and which is transmitted, so as to homogeneously wet the second growth media, underneath in position of use.

The interlayer or particles or flakes can be water repellent treated, which prevents the interlayer from water retention and the particles notably can be advantageously made from recycled material, notably plastic, providing also economic and ecologic advantages. For example, they can be made from waste from cross-linked polyethylene foam and/or other plastics made products which are cut or trimmed into pieces. A possible appropriate particles layer suitable for forming the interlayer is for example a layer used for example for playgrounds or a layer sold under the reference "Ecodrain" by Saint-Gobain Ecophon.

Advantageously, the growth media/interlayer(s) assembly can be covered by a layer or envelope, for example formed from a web or fabric or film, notably plastic made, for protecting and/or holding the assembly and/or preventing roots to go out of the panel (this layer or envelope at the same time generally presenting holes to let out the plants themselves) and/or for giving a given aesthetic aspect to the vegetated panel (for example for giving the same color than the support of the assembly or for printing a logo, etc), the layer or envelope being on at least one side of he panel (generally front) and preferably being on both main side or surrounding all the assembly mentioned above.

The growth media of the panel can be of the same or different sizes (notably different thickness according to the position, top or bottom for example, in the panel) or can be one or several on each row of the panel (between which interlayer(s) are placed).

The vegetated panel according to the invention may also comprise one or more of the following characteristics, taken separately or in combination:
- in position of use, growth media are vertically superposed;
- each growth medium, or layer or row of growth media is separated from the one below (in position of use) by an interlayer;
- the interlayer lets flow the water in excess;
- said first growth medium is the upper in position of use, and said second growth medium is below the first one in position of use;
- at least one growth medium is able to reach a predetermined maximal moisture content above which said water flows out into interlayer below in position of use;
- said predetermined maximal moisture content is between 20 and 90%, and notably around 60%-70%, the maximal moisture content being possibly, depending on the type of growth media, related to the volumic mass of the product (notably for growth media made of rock wool, a volumic mass of the growth media of 70 kg/m² implies approximately a maximal moisture content, from which the water starts to flow, of around 70%) and possibly the fibres thickness;
- the growth media are made from material(s) for growing plants, and notably at least one growth medium comprises mineral materials;
- at least one growth medium material comprises mineral fibres;
- at least one growth medium comprises rock (or stone) wool fibres or glass wool fibres;
- the fibres are crimped;
- at least one growth medium has a volumic mass between 30 and 80 kg/m³ (for example generally between 30 and 45 kg/m³ for the glass wool/fibres made medium and between 45 and 80 kg/m³ for the rock wool/fibres made medium) and notably lower or equal to 50 kg / m²;
- the vegetated panel has a height around 25 to 240 cm, and preferably has a height under 1 m;
- said interlayer(s) is/are flakes structure(s);
- said interlayer(s) material comprises recycled plastic;
- said interlayer(s) material comprises cross-linked polyethylene foam (notably as a main material for example forming at least 75% of the interlayer), but said layer can also or alternatively comprise any other plastic non toxic for nutrients given to plants thought water);
- at least one of said interlayers, or several, or advantageously all interlayers when appropriate, has a thickness around 1 to 3.5 cm, for example around 3 cm;
- said vegetated panel comprises a frame;
- said frame has recesses dimensioned so that holes of said growth media for receiving plants are free and so that the frame covers partially the growth media and covers partially or preferably totally the interlayers;
- said frame comprises apertures associated to holes of growth media for receiving plants and through which an associated plant can go;
- said frame material comprises galvanized steel or a composite, advantageously ultraviolet and thermal stable and resistant to water;
- said vegetated panel comprises a moisture meter of the growth media, said moisture meter being able to trigger an irrigation device when a predetermined moisture content for irrigation is reached;
- said predetermined moisture content for irrigation is generally around 40% or 50%;
- said moisture meter is able to trigger a warning when the moisture content of a growth medium reaches a predetermined minimal moisture content;
- said predetermined minimal moisture content is generally around 40%.

The invention also relates to a vegetated wall comprising one or more vegetated panels as described above.

For example, the vegetated wall can comprise three or four or more vegetated panels.

The vegetated wall may also comprise one or more of the following characteristics, taken separately or in combination:
- said vegetated wall comprises an irrigation device for the whole vegetated panels or some of them;
- a vegetated panel is received in a frame, if appropriate in several parts (notably a front part and a back part) assembled together, having openings communicating with the panel below, so that water can flow from an upper panel to the panel below;
- said vegetated wall comprises at least a collector or gutter under the whole vegetated panels to collect the water in excess.
- the frame is provided with fixing or hanging mean(s) or part(s) cooperating with support(s) for hanging the vegetated panel on walls to be equipped with said vegetated panel.
- said support(s) is/are fixed on wall to be equipped and is/are formed from beam(s) an/or rail(s), and said fixing or hanging mean(s) or part(s) are hooking part(s) provided on the frame for hanging on the support(s).

Other characteristics and advantages of the invention will emerge more clearly on reading the following description, which is given as a non-limiting illustrative example, and the attached drawings, among which:
- figure 1 is a side view of a vegetated panel,
- figure 2 is a schematic back view of the vegetated panel of figure 1,
- figure 3 is a schematic front view of a frame of a vegetated panel of figures 1 and 2,
- figure 4 is a schematic side view of vegetated wall comprising at least a vegetated panel of figures 1 to 3,
- figure 5 is a schematic front view of a vegetated wall comprising four vegetated panels as in figures 1 to 3,
- figure 6 is a bottom view of a frame of a vegetated panel,
- figure 7a is a side view of a hanging device of a vegetated panel,
- figure 7b is a side view of a frame of a vegetated panel with hooks of the hanging device of figure 7a, and
- figure 7c is an enlarged view of figure 7b.

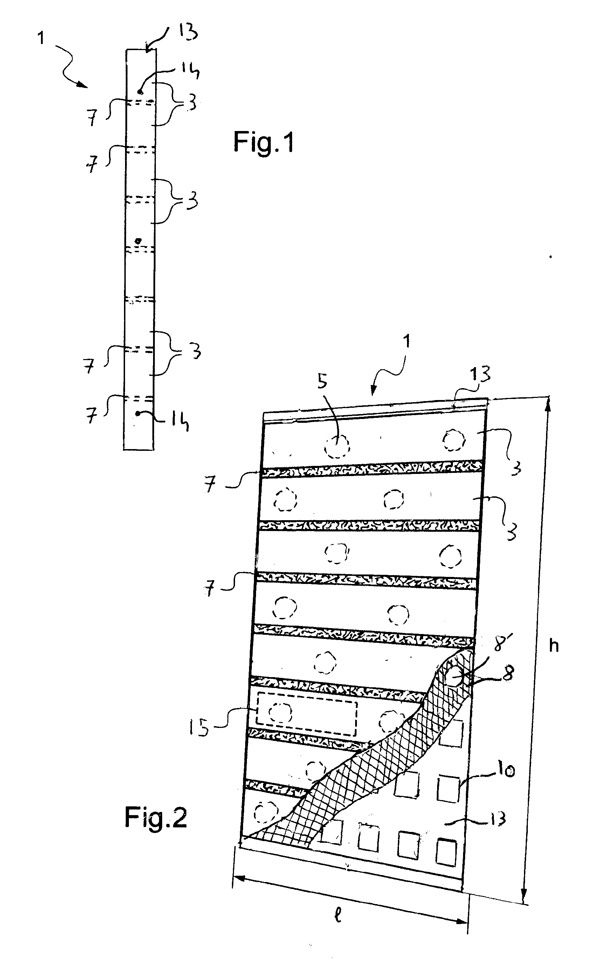

The invention relates to a vegetated panel 1 shown schematically in figures 1 and 2.

Such a vegetated panel 1 comprises several growth media 3 stacked one over the other, each row or level comprising for example one or two (or more than one) growth media, and the top media and bottom media being possibly thicker than the central ones for example to properly fill in the frame (mentioned later on).

The growth media 3 are vertically superposed.

Each growth medium 3 can hold plants. For that, a growth medium is provided with holes 5 for receiving plants, as it can be seen from figure 2.

Further, the vegetated panel 1 comprises interlayers 7 each between two growth media 3 vertically superposed. Thus, sandwich modules are made each time with two growth media 3 and interlayer 7 inserted between both growth media 3.

In the described invention, an interlayer 7 may comprise one or more strata.

Each interlayer 7 prevents direct contact between both growth media 3.

Moreover, each interlayer 7 is water permeable to let flow water in excess in the upper growth medium 3 to the growth medium 3 below.

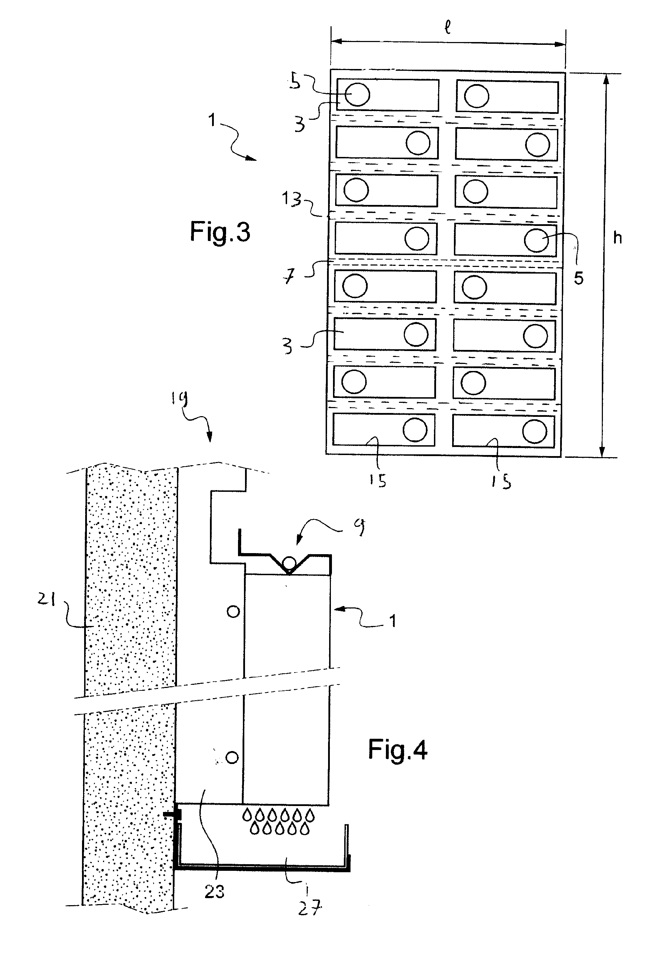

Relative to the growth media 3, as said before each growth medium 3 comprises holes 5 for receiving plants (figures 2 and 3).

Moreover, the growth media 3 are provided with blind holes 5 according to the illustrated example of figure 2. By instance, a growth medium 3 may have a 6,6 cm thickness and the holes 5 may be 6 cm deep. Of course, this example is not limiting.

In the embodiment of figure 2, each growth medium 3 has two holes 5. Of course, this example is illustrative and a growth medium 3 can be provided with less or more holes 5 depending on the application.

Such a hole 5 may be provided by drilling with a tubular saw.

Those holes 5 can thus accommodate different types of plantings.

For example, seeds may be introduced into the holes 5 to fill and are cultivated until an adequate development for rooting is reached.

According to another solution, young plants are directly placed into each hole 5, which allows a savings of time for rooting.

It is also possible to place developed plants in these holes 5, which allows the panel 1 to be put into service very quickly.

In this case, a vegetated panel 1 can be produced on request, immediately starting from cultivated plants.

Preferentially, plants are put into the holes and are grown up during 1-2 month in the panel in a horizontal position that allows the roots of the plants to fix themselves in the growth media 3. During this phase, the panel 1 may be put in a water bath for irrigation of the plants.

Another solution is to directly put the panel 1 vertical, and then sprinkle, for example by placing a supply duct 9 on the first growth medium 3 above (figure 4). Then, the water is distributed to the whole growth media 3 by gravity and through each interlayer 7 (figure 2) as described later.

Further, the plants can be of any kind, hardy plants, seasonal flowering plants, or even a combination of the two types.

According to the described embodiment, a growth medium 3 is able to reach a predetermined maximal moisture content above which said water flows out into interlayer 7 below.

For example, this predetermined maximal moisture content is from 20 to 90%, notably around 60%.

Accordingly, a growth medium 3 advantageously comprises mineral materials. By instance, a growth medium material comprises rock wool.

Alternatively, glass wool may be used.

Rock wool is for example able to reach a 20-90%, notably around 70%, moisture content. Above this maximal threshold, the water in excess streams below. This water in excess can then be distributed to the growth medium 3 below through the interlayer 7. As said before, the interlayer 7 is water permeable to let flow water in excess in the upper growth medium 3 to the growth medium 3 below.

More particularly, the wool fibres are crimped. This non directed orientation of the wool fibres contributes to the retaining of water and good fonctioning of the panel.

According to a suitable embodiment, a growth medium 3 has a volumic mass of 30-80 kg/m³ or lower, for example of 70 kg/m³. Thanks to this, only few operators are needed for handling.

Else, as it can be seen from figure 2, a panel 1 with several stacked growth media 3, may have a parallelepipedic shape.

This parallelepipedic panel 1 may be around 25 to 240 cm high h. The panel 1 may be 20-70 cm, notably around 60 cm, large 1.

Thus, a growth medium 3 has an essentially rectangular shape. And, the holes 5 may be aligned along the longitudinal axis of the rectangular growth medium 3.

Of course the shape of the growth media 3 and then the panel 1 may be adapted to conform to the geometry of the locations designed to receive the vegetated panel 1.

Further, the stone wool may be black or an additional element, namely a black fabric 8, with where needed holes 8' for letting the plants out, may be added on the external face of the growth media 3, that means the face being seen. This black appearance notably improves the aesthetic appearance.

Referring now to an interlayer 7, it is advantageously a flakes structure.

Such an interlayer 7 may have a thickness around 1 to 3.5 cm.

The interlayer 7 may be made of recycled plastic.

In a suitable embodiment, the interlayer 7 material may be XPE foam. XPE means Cross-linked polyethylene. Thus, the interlayer 7 is in a preferred embodiment a XPE-flakes structure.

Such a XPE-flakes structure provides open structure between the XPE-flakes, that enables a maximum water flowing.

Thus, as said before, the interlayer 7 is water permeable to let flow water in excess in the upper growth medium 3 to the growth medium 3 below.

More, this interlayer 7 acts as a separative layer between two growth media 3. Thus, the roots from a growth medium 3 can not come into contact with the roots from another growth medium 3.

Further, when the growth media 3 are made of a mineral materials, such as stone wool, then the interlayer 7 separates the fibres of each growth medium 3. Thus, the fibres of a growth medium 3 can not come into contact with the fibres of another growth medium 3.

Thus, the interlayer 7 prevents a capillary water flow effect meaning that it would let nearly all water flow from the upper growth medium 3 down to the growth medium 3 directly by capillary.

On the contrary, the interlayer 7 ensures a water distributor for the growth medium 3 below.

Indeed, when water streams down from the upper growth medium 3, for example having reached a 60% or 70% moisture content, then water flows through interlayer 7, and then into the growth medium 3 below.

Thus, water is distributed to the growth medium 3 below only when the upper growth medium 3 has reached the maximal predetermined moisture content . Thus, the upper growth medium 3 keeps moisture content. Indeed, all the water does not immediately flow down by capillary effect and then accumulate in the lowest growth medium 3, such as when the growth media 3 touch each other.

The interlayers 7 thus ensure a regular and suitable distribution of water to the growth media 3 below.

As said previously, the irrigation may be provided first by a flat cultivation and then the panel 1 is put vertical. Or, an irrigation device may sprinkle the growth media 3.

In this later case, due to each interlayer 7 ensuring a suitable water distribution to the growth medium 3 below, a single irrigation device is needed for the whole growth media 3.

For example, water is supplied only to the upper growth medium 3 through the supply duct 9 schematically represented on figure 4.

Only for the first time in order to wet the panel for the first time, water may be supplied for two hours.

In normal functioning, it is generally only necessary to sprinkle again only one time a day for a couple of minutes in order to compensate water lost during day. This is preferably done by night.

Furthermore, in a more developed embodiment, the panel 1 may comprise a moisture meter (not shown) for measuring the moisture content of the growth media 3.

This moisture meter may be able to trigger an irrigation device when a predetermined moisture content for irrigation is reached. As an example, said predetermined moisture content for irrigation is for example around 50%.

Thus, when the moisture content reaches for example 50%, the panel 1 is sprinkled, by instance through said supply duct 9 supplying water advantageously only to the first growth medium 3. And then, water is regularly distributed to the growth media 3 below through interlayers 7 when reached for example a 60% or 70% moisture content.

Water may also be provided in case of dryness. In this case, the moisture meter (not shown) may be able to trigger a warning when the moisture content of a growth medium 3 reaches a predetermined minimal moisture content, for example around 40%.

Such a situation may happen in particularly sunny days and/or when it is very windy.

When the warning is triggered, the panel 1 is irrigated in a more consistent manner. For example, water may be given for a longer period than in normal functioning or for example with more flow.

The various given threshold for moisture content are not limiting. Those 40% minimal moisture content, 50% moisture content for irrigation, and 60% or 70% maximal moisture content are for example suited for stone wool growth media 3.

Those thresholds may be adapted depending on the density and the fibres structure of another material chosen for growth media 3.

Furthermore, by separating the growth media 3 from each other thanks to the interlayers 7, it thus is possible to easily replace a growth medium 3 by another. The entire panel 1 is not necessary to be changed.

The growth media 3 may be changed for example every five years.

Such a panel 1 with growth media 3 between which interlayers 7 are placed, may further comprise a frame 13 for maintaining the growth media 3 and the interlayers 7.

This frame 13 may be a metallic frame 13. In particular, the frame 13 may be an galvanized steel frame 13.

The frame is substantially parallelepipedic for holding the whole panel 1 when the panel 1 is substantially parallelepipedic and can be made from a front part and a back part tight together thanks for exemple to screws 14

According to a first embodiment shown on figure 3, the frame 13 has front openings 15, for example substantially rectangular.

Those openings 15 may be dimensioned so that the holes 5 are free while the frame 13 covers partially the growth media 3 and covers totally the interlayers 7.

To clarify this point, an example of such an opening 15 place is shown schematically in dashed lines on figure 2. Similarly, on figure 3 an interlayer 7 place is shown schematically with dashed lines. The frame can also present apertures 10 on the back, front and back openings being notably provided for aesthetic reasons and for making the panel lighter, while letting plants go out.

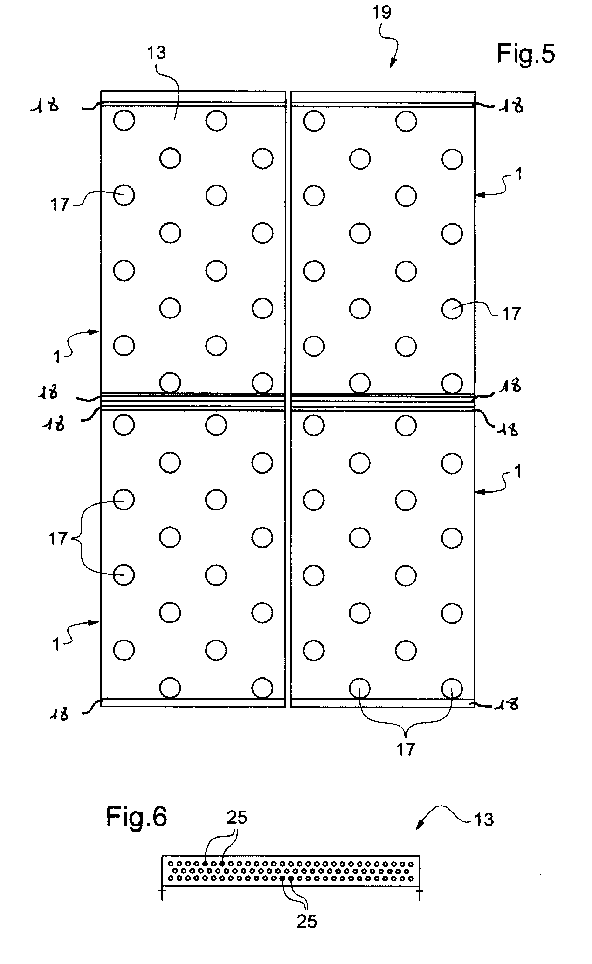

According to a second embodiment shown on figure 5, the frame 13 has apertures 17 corresponding to holes 5 to let the plants go through these apertures 17. The holes 5 are free and the rest of the growth media 3 are covered by the frame 13 as well as the interlayers 7.

On figure 5, horizontal lines 18 define the border lines on extremities of a panel 1.

A suitable application is a vegetated wall 19 (figure 4).

Such a vegetated wall may be provided inside or outside a building, on an host wall 21 which is an internal or an external wall of a building.

The vegetated wall 19 comprises one or more panels 1 as described before.

Between the wall 21 and the panel(s) 1, an insulative layer 23 may be provided.

The vegetated panels 1 are vertically superposed one over the other.

Further panels 1 may also be aligned horizontally as shown in figure 5.

Each panel 1 may be hold in an associated frame 13.

According to a suitable embodiment, a single irrigation device is provided for the whole wall 19. In this case, the frames 13 of each panel 1 may be provided with openings 25 (figure 6) facing the frame 13 below, in order to let the water in excess in the first panel 1 flow down to the panel 1 below.

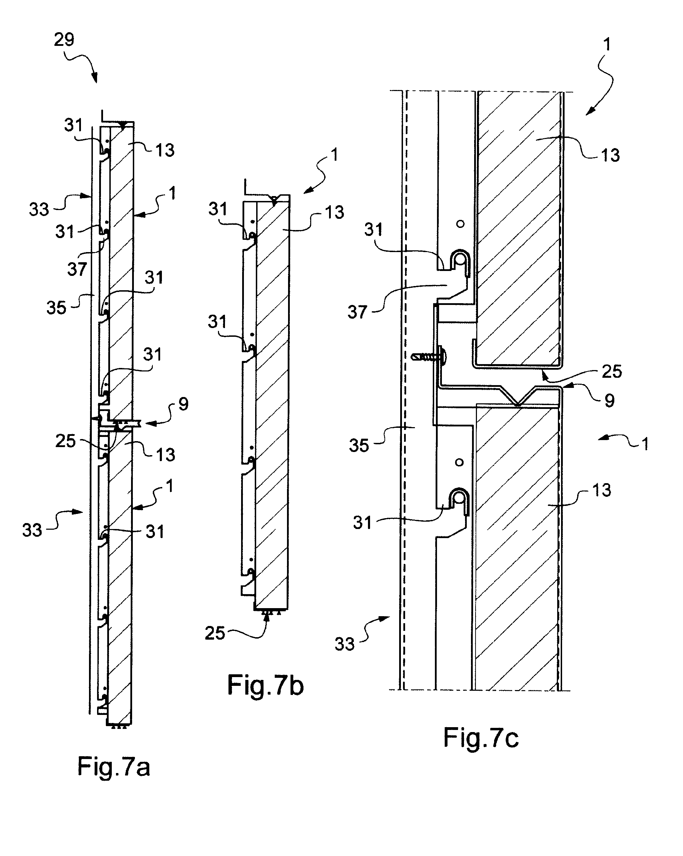

Additional ducts 9 (figure 7a) may be provided at the top of each panel 1 to redistribute the water in excess in the upper panel 1 flowing down through the openings 25.

At least one collector 27 (figure 4) below the lowest panel 1 may collect a part of water, such as the water in excess, after water distribution to the whole growth media 3 through interlayers 7 of each panel 1 of the wall 19.

The collector 27 may be a gutter.

Further, such a wall 19 comprises a hanging system 29 of the panels 1 (figure 7a).

Such a hanging system 29 is provided on one hand on the frame 13 of a panel 1 and on the other hand on the host wall 21.

The hanging system 29 comprises first and second hanging means provided on the panels 1 and on the host wall 21.

More precisely, the first hanging means 31 is provided on the frame 13 of the panels 1, and the second hanging means 33, 37 is provided on the host wall 21.

More precisely, when there is an insulative layer 23 between the wall 21 and the panels, the second hanging means of the hanging system 29 can be fixed on this insulative layer 23.

The hanging system 29 may comprise hooks 31 cooperating with fixation rails 33.

According to the illustrated embodiment of figures 7a to 7c, the hooks 31 are hold by the frames 13 of panels 1. And, the fixation rails 33 may be fixed on the hosted wall 21 or the insulative layer 23.

The fixation rails 33 may have a substantial ladder shape with two vertical legs 35 which are joined each other by transversal rods 37. In the illustrated embodiment, the transversal rods 37 are regularly spaced.

The transversal rods 37 have a complementary shape to the hooks 31 shape.

By instance, the transversal rods 37 have a cross section with a counter hook shape. Thus, the hooks 31 engage this counter hook shape.

Thus, with a vegetated panel with sandwich modules of two growth media 3 separated by an interlayer 7 as described above, the panel 1, when put vertical, does not have a top portion which is dry while the last centimetres at the bottom are humid. Once entirely properly wetted, the panel can be let 2 weeks without water whereas on present existing vegetated wall systems, one day without irrigation is critical.

More, the growth media 3 can be easily replaced independently. And, in particular with stone wool of 50kg/m² density, just a few operators are required.

Further, a wall comprising such panels may needed only one irrigation device for the whole panels.

As a consequence, the panels 1 are lighter and less expensive than in the prior art, and then the wall is less expensive.

For information, such a vegetated panel as described above, is twice cheaper than known vegetated panels.

The vegetated panels according to the invention are notably suitable for inside or advantageously outside decoration of walls of a building.

## Claims

1. Vegetated panel comprising at least two growth media (3) for plants, which are vertically superposed in position of use, wherein said growth media (3) are separated by at least an interlayer (7), said interlayer (7) both
- preventing direct contact between both growth media (3), and
- being water permeable,
and wherein said interlayer (7) is a material with a water retention capacity, named pf1, lower than 10% and which resists roots, **characterized in that** this interlayer comprises at least one layer of particles or flakes of the millimeter or centimeter size, generally mostly from 0,5mm to 5cm wide and at least a veil preventing the passage of roots.

2. Vegetated panel according to claim 1, wherein a growth medium (3) is configured to reach a predetermined maximal moisture content above which said water flows out into interlayer (7) below.

3. Vegetated panel according to claim 2, wherein said predetermined maximal moisture content is between 20 and 90%.

4. Vegetated panel according to one of the preceding claims, wherein at least one growth medium comprises mineral materials, in particular mineral fibres, notably rock or glass wool fibres.

5. Vegetated panel according to claim 4, wherein the fibres are crimped.

6. Vegetated panel according to one of the preceding claims, wherein said interlayer (7) material comprises recycled plastic.

7. Vegetated panel according to claim 6, wherein said interlayer (7) material comprises Cross-linked polyethylene foam.

8. Vegetated panel according to one of the preceding claims, wherein at least one interlayer has a thickness between 1 and 3.5 cm.

9. Vegetated panel according to one of the preceding claims, wherein it comprises a frame (13).

10. Vegetated panel according to claim 9, wherein said frame (13) has recesses (15) dimensioned so that holes (5) of said growth media (3) for receiving plants are free and so that the frame (13) covers partially the growth media (3) and covers totally the interlayers (7).

11. Vegetated panel according to claim 9, wherein said frame (13) comprises apertures (17) associated to holes (5) of growth media (3) for receiving plants and through which an associated plant can go.

12. Vegetated panel according to one of claims 9 to 11, wherein said frame (13) material comprises galvanized steel or a composite.

13. Vegetated wall **characterized in that** it comprises at least one, notably at least two vegetated panels (1) according to one of the preceding claims.

## Patentansprüche

1. Begrünungsplatte mit mindestens zwei, in Gebrauchsstellung vertikal übereinander angeordneten Kultursubstraten (3) für Pflanzen, wobei die Kultursubstrate (3) durch wenigstens eine Zwischenschicht (7) voneinander getrennt sind, wobei die Zwischenschicht (7) sowohl
- einen direkten Kontakt zwischen beiden Kultursubstraten (3) verhindert als auch
- wasserdurchlässig ausgebildet ist,
und wobei als Zwischenschicht (7) ein wurzelfestes Material mit einem Wasserrückhaltevermögen pf1 von weniger als 10% dient, **dadurch gekennzeichnet, dass** diese Zwischenschicht mindestens eine Schicht von millimeter- oder zentimetergroßen, in der Regel meistens 0,5 mm bis 5 cm breiten Teilchen oder Plättchen und wenigstens ein Vlies gegen Wurzeldurchwuchs umfasst.

2. Begrünungsplatte nach Anspruch 1, bei der ein Kultursubstrat (3) so ausgeführt ist, dass ab einem vorbestimmten Feuchtigkeitshöchstgehalt das Wasser in die darunterliegende Zwischenschicht (7) abfließt.

3. Begrünungsplatte nach Anspruch 2, bei der der vorbestimmte Feuchtigkeitshöchstgehalt bei zwischen 20 und 90% liegt.

4. Begrünungsplatte nach einem der vorhergehenden Ansprüche, bei der mindestens ein Kultursubstrat Mineralstoffe, insbesondere Mineralfasern, vor allem Fasern aus Stein-oder Glaswolle umfasst.

5. Begrünungsplatte nach Anspruch 4, bei der die Fasern gekräuselt sind.

6. Begrünungsplatte nach einem der vorhergehenden Ansprüche, bei der das Material der Zwischenschicht (7) Kunststoffrecyclat umfasst.

7. Begrünungsplatte nach Anspruch 6, bei der das Material der Zwischenschicht (7) vernetzten Polyethylenschaumstoff umfasst.

8. Begrünungsplatte nach einem der vorhergehenden Ansprüche, bei der mindestens eine Zwischenschicht über eine Stärke zwischen 1 und 1,3 cm verfügt.

9. Begrünungsplatte nach einem der vorhergehenden Ansprüche mit Rahmen (13).

10. Begrünungsplatte nach Anspruch 9, bei der der Rahmen (13) über so bemessene Ausnehmungen (15) verfügt, dass zur Aufnahme von Pflanzen bestimmte Löcher (5) der Kultursubstrate (3) frei liegen und der Rahmen (13) die Kultursubstrate (3) teilweise und die Zwischenschichten (7) völlig zudeckt.

11. Begrünungsplatte nach Anspruch 9, bei der der Rahmen (13) den zur Aufnahme von Pflanzen bestimmten Löchern (5) der Kultursubstrate (3) zugeordnete und von einer zugeordneten Pflanze passierbare Öffnungen (17) umfasst.

12. Begrünungsplatte nach einem der Ansprüche 9 bis 11, bei der das Material des Rahmens (13) galvanisierten Stahl oder einen Verbundstoff umfasst.

13. Begrünungswand, **dadurch gekennzeichnet, dass** sie mindestens eine, vor allem aber mindestens zwei Begrünungsplatten (1) gemäß einem der vorhergehenden Ansprüche umfasst.

## Revendications

1. Panneau végétalisé, comprenant au moins deux milieux de croissance (3) pour des plantes, lesquels sont superposés verticalement dans la position d'utilisation, dans lequel lesdits milieux de croissance (3) sont séparés par au moins une couche intermédiaire (7), ladite couche intermédiaire (7)
- prévenant un contact direct entre les deux milieux de croissance (3), et aussi
- étant perméable à l'eau, et dans lequel ladite couche intermédiaire (7) est un matériau présentant une capacité de rétention de l'eau, que l'on désigne par le terme pf1, inférieure à 10 %, et qui résiste aux racines, **caractérisé en ce que** cette couche intermédiaire comprend au moins une couche de particules ou de flocons dont la taille, exprimée en millimètres ou en centimètres, est en général essentiellement de 0,5 mm à 5 cm de large, et au moins un voile empêchant le passage des racines.

2. Panneau végétalisé selon la revendication 1, dans lequel un milieu de croissance (3) est configuré pour atteindre une teneur en humidité maximale prédéterminée au-dessus de laquelle ladite eau s'écoule en passant dans la couche intermédiaire (7) située dessous.

3. Panneau végétalisé selon la revendication 2, dans lequel ladite teneur en humidité maximale prédéterminée est de 20 % à 90 %.

4. Panneau végétalisé selon l'une quelconque des revendications précédentes, dans lequel au moins un milieu de croissance comprend des matériaux minéraux, en particulier des fibres minérales, notamment des fibres de laine de roche ou de verre.

5. Panneau végétalisé selon la revendication 4, dans lequel les fibres sont ondulées.

6. Panneau végétalisé selon l'une quelconque des revendications précédentes, dans lequel le matériau de ladite couche intermédiaire (7) comprend un plastique recyclé.

7. Panneau végétalisé selon la revendication 6, dans lequel le matériau de ladite couche intermédiaire (7) comprend une mousse de polyéthylène réticulée.

8. Panneau végétalisé selon l'une quelconque des revendications précédentes, dans lequel au moins une couche intermédiaire a une épaisseur de 1 cm à 3,5 cm.

9. Panneau végétalisé selon l'une quelconque des revendications précédentes, lequel comprend un cadre (13).

10. Panneau végétalisé selon la revendication 9, dans lequel ledit cadre (13) comporte des creux (15) dimensionnés de telle sorte que des trous (5) dans lesdits milieux de croissance (3) destinés à recevoir des plantes soient libres et de telle sorte que le cadre (13) recouvre en partie les milieux de croissance (3) et recouvre totalement les couches intermédiaires (7).

11. Panneau végétalisé selon la revendication 9, dans lequel ledit cadre (13) comprend des ouvertures (17) associées aux trous (5) dans les milieux de croissance (3) destinés à recevoir des plantes et à travers lesquelles une plante associée peut passer.

12. Panneau végétalisé selon l'une quelconque des revendications 9 à 11, dans lequel le matériau dudit cadre (13) comprend un acier galvanisé ou un composite.

13. Mur végétalisé **caractérisé en ce qu'**il comprend au moins un, notamment au moins deux panneaux végétalisés (1) selon l'une quelconque des revendications précédentes.
